Europäisches Patentamt

European Patent Office

Office européen des brevets

(11) Numéro de publication : **0 344 027 B1**

(12) **FASCICULE DE BREVET EUROPEEN**

(45) Date de publication du fascicule du brevet :
**19.05.93 Bulletin 93/20**

(21) Numéro de dépôt : **89401141.0**

(22) Date de dépôt : **21.04.89**

(51) Int. Cl.⁵ : **H01S 3/00,** G02B 6/28

(54) *Dispositif pour engendrer, à partir d'une impulsion lumineuse unique de brève durée, un train d'impulsions lumineuses synchrones et appareillage de mesure de la forme temporelle d'une impulsion lumineuse unique en faisant application.*

(30) Priorité : **27.04.88 FR 8805613**

(43) Date de publication de la demande :
**29.11.89 Bulletin 89/48**

(45) Mention de la délivrance du brevet :
**19.05.93 Bulletin 93/20**

(84) Etats contractants désignés :
**AT BE CH DE ES FR GB GR IT LI NL SE**

(56) Documents cités :
**EP-A- 0 078 140**
**EP-A- 0 139 387**
**US-A- 4 136 929**

(56) Documents cités :
**ELECTRONICS LETTERS, vol. 19, no. 19, 15 septembre 1983, pages 756-758, Londres, GB; S.A. NEWTON et al.: "High-speed pulse-train generation using single-mode-fibre recirculating delay lines"**
**IEEE TRANSACTIONS ON MICROWAVE THEORY AND TECHNIQUES, vol. MTT-33, no. 3, March 1985, pages 193-210, IEEE, New York, US; K.P. JACKSON et al.: "Optical fiber delay-line signal processing"**

(73) Titulaire : **ORGANISATION EUROPEENNE POUR LA RECHERCHE NUCLEAIRE (CERN) CH-1211 Geneve 23 (CH)**

(72) Inventeur : **Bovet, Claude CH-1287 Founex (CH)**
Inventeur : **Rossa, Edouard Pitegny 6 F-01170 Gex (FR)**

(74) Mandataire : **Gorree, Jean-Michel et al Cabinet Plasseraud 84, rue d'Amsterdam F-75009 Paris (FR)**

Il est rappelé que : Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

EP 0 344 027 B1

## Description

### Domaine technique de l'invention.

La présente invention concerne un dispositif permettant de stocker des photons et d'engendrer, à partir d'une impulsion lumineuse unique de brève durée, un train d'impulsions lumineuses équidistantes comportant chacune un photon en moyenne. L'invention concerne également un appareillage permettant de déterminer la forme d'une impulsion lumineuse unique de brève durée qui fait application du dispositif précité, le profil temporel de cette impulsion unique et brève étant typiquement compris entre 5 et 2000 picosecondes, cette impulsion pouvant avoir une très faible énergie (par exemple environ 1 picojoule) et étant une onde électromagnétique qui peut être indifféremment cohérente ou non cohérente.

### Art antérieur.

La connaissance du profil temporel d'une impulsion lumineuse peut être obtenue actuellement par mise en oeuvre de divers procédés, selon le type de l'impulsion.

Dans le cas d'impulsions lumineuses brèves (1 à 1000 ps) mais répétitives, les impulsions de photons sont transformées tout d'abord en impulsions électriques par l'intermédiaire d'un photodétecteur et ensuite analysées.

Cette analyse est réalisée habituellement par échantillonnage des impulsions électriques au moyen d'un oscilloscope électrique à échantillonnage qui permet de prélever une partie de l'information à chaque impulsion électrique et de construire ainsi par partie la forme recherchée. Il existe des oscilloscopes à échantillonnage classique électrique qui permettent d'atteindre des fronts de montée de 25 ps. Les oscilloscopes supraconducteurs à effet Josephson permettent d'atteindre 5 ps à 20 ps, de même que l'oscilloscope optique de Hamamatsu qui utilise une entrée optique directe sur un tube à balayage de fente.

Cette technique d'échantillonnage ne s'applique malheureusement qu'à des impulsions répétitives.

Dans le cas d'une lumière cohérente, des dispositifs d'optique non linéaire permettent de mesurer des profils d'autocorrélation temporelle d'impulsion brève répétitive ou non-répétitive dans le domaine inférieur à la picoseconde. Cependant, de tels autocorrélateurs ne fonctionnent qu'en lumière cohérente. En outre, la mise en oeuvre de ces techniques d'échantillonnage nécessite, pour l'obtention de résultats fiables, que les impulsions successives soient parfaitement périodiques et de formes identiques, condition qui n'est pas souvent rencontrée dans la pratique. Enfin, il n'est pas possible, par cette technique connue, de déterminer la forme d'impulsions en petit nombre (par exemple inférieur à 10), voire d'impulsions isolées.

Dans le cas, maintenant, d'une impulsion lumineuse unique (qu'elle soit cohérente ou non cohérente), plusieurs procédés sont actuellement utilisables.

On utilise souvent une caméra à balayage de fente où une visualisation de l'impulsion sur un tube à mémoire après une brusque déflexion électrique permet une résolution de l'ordre de la picoseconde. Cependant, la mise en oeuvre d'une telle caméra à balayage de fente ne peut pas toujours être envisagée à cause de ses dimensions géométriques importantes et de son coût élevé. De plus, l'exploitation des résultats est difficile : elle nécessite une deuxième caméra pour analyser l'image et demande un temps important d'évaluation numérique.

On peut également utiliser, dans certains cas, des enregistreurs de transitoire, mais la bande passante de ces appareils n'est actuellement que de 6 gigahertz, ce qui est insuffisant pour l'étude d'impulsions lumineuses très brèves.

L'autocorrélateur à photoconducteurs présenté à San Diego par E. Rossa le 16-21 Août 1987 (SPIE) permet d'atteindre des résolutions meilleures que 10 ps pour des impulsions uniques, mais il nécessite des énergies énormes dans l'impulsion incidente (de l'ordre du microjoule absorbé par chaque photoconducteur). D'autre part, il ne permet pas une mesure de la forme réelle de l'impulsion, mais seulement du profil d'autocorrélation, et le nombre de points de mesure est limité.

Un autre processus, dit procédé de l'histogramme statistique, consiste à mesurer l'instant d'occurrence d'évènements dont la probabilité d'occurrence est proportionnelle à l'amplitude de l'impulsion. L'histogramme de ces évènements reproduit la forme de l'impulsion à condition que la probabilité d'occurrence de l'évènement soit suffisamment petite (par exemple de l'ordre de 1 %) pour que la possibilité que l'évènement soit un évènement multiple reste négligeable. Cette méthode est intéressante car il suffit alors de mesurer la durée s'écoulant entre un déclenchement synchrone et un évènement, mesure qui peut être actuellement réalisée avec une précision de l'ordre de 10 ps. Bien entendu, il est nécessaire d'être assuré, d'une part, que tous les évènements survenus sont effectivement détectés et, d'autre part, que les évènements multiples restent aussi rares que possible.

La mise en oeuvre du procédé de l'histogramme statistique implique d'enregistrer des évènements à faible probabilité d'occurrence et, comme un grand nombre de points (au moins égal à 1000) est nécessaire pour établir un histogramme crédible, le nombre des passages des impulsions de photons doit être très important, savoir plusieurs milliers.

Ce procédé statistique n'a été, jusqu'à présente, utilisé pour mesurer la forme temporelle d'impulsions lumineuses par prélèvement de photon unique que dans le cas d'impulsions lumineuses initiales répétitives (voir A. Corney dans la revue "Advanced Electronics and Electrophysics", vol. 29 (1970), page 115).

Par ailleurs, il a déjà été proposé de réaliser des générateurs de trains d'impulsions lumineuses constitués à l'aide de fibres optiques refermées sur elles-mêmes pour former des boucles fermées dans lesquelles circulent les impulsions. Une réalisation élémentaire de boucle fermée est décrite dans le brevet US n° 4 136 929 (SUZAKI), le rendement étant toutefois fortement affecté par une réalisation trop rustique.

De plus, le but recherché avec ce montage connu n'est pas d'obtenir un train d'impulsions lumineuses synchrones comportant chacune un photon unique en moyenne, résultat que ce type de montage ne pourrait du reste pas procurer de façon effective. Enfin, les enseignements de ce brevet restent purement théoriques, car il n'est fourni aucune précision de réalisation pratique pouvant conduire à un résultat exploitable (notamment les fibres disponibles à cette époque n'étaient pas encore monomode et présentaient une dispersion importante, les connecteurs de fibre unique étaient peu performants, etc.).

En ayant recours à des coupleurs optiques directionnels, tels que celui décrit dans l'article intitulé "Single mode fiber optic directional coupler" de R.A. Bergh et autres, dans la revue "Electronics Letters", vol. 16, n° 7, du 27 mars 1980, il est possible de réaliser, comme indiqué dans la demande de brevet EP n° 0 078 140, une boucle de stockage plus performante dans laquelle l'affaiblissement est d'environ 2 % par tour. Toutefois, du fait que le coefficient de transmission de ce type de coupleur est de 98 %, le détecteur situé à la sortie voit une première impulsion correspondant à 98 % de l'énergie totale du paquet de photons tandis que les impulsions suivantes tombent à $10^{-4}$ : le détecteur, ébloui par la première impulsion, ne détecte plus les impulsions qui suivent immédiatement et l'erreur qui en résulte est inacceptable pour effectuer une quelconque détection fiable, notamment pour la mise en oeuvre du procédé statistique précité.

Avec une boucle fermée à deux coupleurs optiques directionnels comme décrite dans la demande de brevet EP n° 0 080 841 ou dans l'article intitulé "Single mode fiber recirculating delay line" de S.A. Newton et autres, dans la revue SPIE vol. 326 Fiber Optics -Technology'82 (1982), l'énergie des impulsions se trouve uniformément ramenée à $10^{-4}$, y compris pour la première impulsion apparaissant en sortie ; toutefois l'affaiblissement est alors de 4 % par tour et le nombre d'impulsions susceptibles d'être délivrées au détecteur pour une détection significative est trop faible (de l'ordre de 25) pour la mise en oeuvre de la méthode statistique.

D'après l'article intitulé "Optical fiber delay-line signal processing" de K.P. Jackson et autres, dans la revue "IEEE Transactions on microwave theory and techniques", vol. HTT-33, n° 3, Mars 1985, correspondant également à la demande de brevet EP-A-0 139 387 ou aussi à l'article intitulé "High-Speed pulse-train generation using single-mode-fibre recirculating delay lines", par Newton et autres, dans la revue "Electronics Letters" vol. 19, N° 19, Septembre 1983, on connaît un agencement à deux boucles fermées disposées en série qui permet d'obtenir, au niveau du détecteur, des trains d'impulsions successifs légèrement retardés les uns par rapport aux autres, et donc d'observer un grand nombre d'impulsions. Toutefois, en raison de la liaison en série des deux boucles équipées chacune d'un seul coupleur, la première impulsion à très forte intensité est transmise en sortie et cette disposition offre le même inconvénient que l'agencement à boucle unique précité.

On peut également noter que les dispositifs connus précités à deux boucles fermées disposées en série mettent en oeuvre des coupleurs optiques à coefficient de couplage fort pour effectuer le raccordement tangentiel de la fibre optique sur elle-même, au niveau de chaque boucle. L'obtention d'impulsions lumineuses de sortie comportant un très petit nombre de photons (voire a fortiori un photon unique) nécessiterait que ce coefficient de couplage soit le plus élevé possible, d'au moins 99 %, voire 99,9 %. Technologiquement cela se traduit par la réalisation de méplats de grandes dimensions, par des polissages importants et très difficiles et délicats à réaliser. De tels coefficients de couplage sont extrêmement difficiles à obtenir en pratique.

De plus, toujours du point de vue de la fabrication, il faut noter que les dispositifs antérieurs précités sont formés par une fibre unique, qui est lovée sur elle-même en plusieurs emplacements successifs pour constituer les boucles disposées en série. Ce mode de réalisation nécessite un polissage de la fibre unique en un grand nombre d'emplacements (deux par boucle), avec à chaque fois un enlèvement de matière important si l'on souhaite obtenir un coefficient de couplage élevé. Ce travail de la fibre optique, délicat et difficile, présente de grands risques car une erreur de polissage en un emplacement quelconque entraîne la mise au rebut de la fibre dans sa totalité ; si l'erreur a été commise sur le dernier emplacement à travailler, tous les surfaçages précédemment effectués l'ont été en vain. En tout état de cause, le coût de fabrication d'un tel dispositif à fibre unique est très élevé.

En outre, les emplacements où les méplats doivent être réalisés sont prédéterminés par le calcul. Une fois que les surfaces polies sont réunies pour former la succession des boucles, il n'est plus possible de procéder à un ajustement précis de la longueur individuelle des boucles, et là encore une erreur dans le positionnement longitudinal de l'une quelconque des surfaces polies, qui n'est pas compensable, entraîne le rejet de toute la fibre.

Enfin, en raison même de leur structure, les dispositifs connus à fibre unique formant plusieurs boucles ne possèdent qu'une seule entrée et une seule sortie respectivement aux deux entrémités de la fibre, et ne se prêtent donc pas à une utilisation double dans laquelle on établirait deux courants de circulation simultanée à contresens.

En conclusion, aucune des réalisations ci-dessus indiquées n'était en mesure de contribuer de façon effective et efficace à la mise en oeuvre du procédé de l'histogramme statistique dans le cas d'une impulsion lumineuse initiale unique.

## Buts de l'invention.

L'invention a donc essentiellement pour but de proposer un dispositif qui autorise la mise en oeuvre effective du procédé de l'histogramme statistique dans le cas d'une impulsion lumineuse initiale unique ; autrement dit qui permette de prélever et de stocker un grand nombre de photons provenant d'une impulsion initiale à mesurer, bien que cette impulsion soit unique, la distribution temporelle des photons stockés étant identique à celle de l'impulsion initiale, et de délivrer ensuite ces photons stockés de façon aléatoire selon une loi de probabilité donnée par une fonction périodique de période $\Delta T$, à module variable reproduisant la forme de l'impulsion initiale, le dispositif devant être agencé pour qu'une procédure d'échantillonnage comprenne plusieurs milliers de cycles de mesure ; le dispositif devant en outre être tel qu'à chaque cycle de mesure l'espérance mathématique d'observation d'un photon soit égale ou inférieure à l'unité, garantissant ainsi l'occurrence et l'observation de photons uniques dont les temps d'occurrence, dans la période $\Delta T$, sont caractéristiques de la forme de l'impulsion initiale restituée par l'histogramme statistique ; le dispositif devant en outre pourvoir détecter toutes les impulsions de sortie sans être temporairement inhibé par une première impulsion d'intensité trop élevée ; le dispositif devant enfin pouvoir fonctionner aussi bien en lumière incohérente qu'en lumière cohérente.

## Dispositions principales de l'invention.

Selon l'invention, le dispositif pour engendrer, à partir d'une impulsion lumineuse unique de brève durée et constituée d'un nombre prédéterminé N de photons, un train d'impulsions lumineuses équidistantes comportant chacune au plus un photon en moyenne, a les propriétés suivantes :

- il comprend plusieurs trajets optiques constitués chacun par au moins une fibre optique monomode à dispersion nulle en forme de boucle fermée sur elle-même par raccordement bout-à-bout de ses extrémité au moyen d'au moins un connecteur ;
- le nombre des boucles est de n si le nombre N des photons dans l'impulsion initiale est supérieur $10^{2n}$ ;
- ces boucles sont réunies deux à deux, les unes à la suite des autres, par des premiers moyens de couplage optique directionnel ayant un coefficient de couplage optique relativement faible et égal à environ $(1/N)^{1/(n+1)}$ ;
- des seconds moyens de couplage optique directionnel ayant eux aussi un coefficient de couplage optique relativement faible réunissent les première et dernière boucles avec des trajets optiques extérieurs respectivement pour l'entrée de seulement une faible partie de l'impulsion lumineuse initiale et pour la sortie du train d'impulsions équidistantes constituées au plus d'un photon unique en moyenne ;
- les longeurs des boucles sont choisies de façon que les périodes de rotation des photons dans les boucles sont égales à des nombres entiers premiers entre eux multiples de périodes élémentaires $\Delta T$ , et
- que les périodes de rotation des photons dans les boucles sont suffisamment petites pour que les photons restant dans les boucles à la fin d'une procédure d'échantillonnage ne constituent pas un bruit de fond gênant pour la procédure d'échantillonnage suivante.

Avantageusement, le coefficient de couplage des premiers et seconds moyens de couplage est inférieur à 10 %, notamment inférieur à 1 %.

De préférence, chaque boucle est constituée de deux tronçons de fibre optique monomode associés respectivement de façon fixe aux seconds moyens de couplage et deux connecteurs optiques à faibles pertes sont prévus pour raccorder bout-à-bout ces deux tronçons de fibre optique.

De préférence encore, chaque boucle est constituée de trois tronçons de fibre optique monomode associés respectivement de façon fixe aux seconds moyens de couplage et trois connecteurs optiques à faibles pertes sont prévus pour raccorder bout-à-bout ces trois tronçons de fibre optique.

Constructivement, le dispositif est constitué de deux boucles successives ; les périodes $T_1$ et $T_2$ de rotation des photons dans ces deux boucles sont telles que

$$T_1 = p.\Delta T \text{ et } T_2 = q.\Delta T,$$

$\Delta T$ étant la durée d'un cycle de mesure et p et q étant deux entiers premiers entre eux et satisfaisant à la relation

$$Q_1^q + Q_2^p \leqq 1$$

afin que la seconde boucle ne produise en sortie qu'un photon unique, $Q_1$ et $Q_2$ étant les raisons des progressions géométriques traduisant les décroissances du nombre des photons respectivement dans ces deux boucles ; le coefficient de couplage des premiers moyens de couplage entre les deux boucles est moitié moindre que les coefficients de couplage des seconds moyens de couplage des première et seconde boucles avec les trajets optiques extérieurs correspondants, lesquels coefficients sont égaux à environ

$$3\sqrt{1/N}$$

où N est le nombre de photons dans l'impulsion unique d'entrée.

Les boucles peuvent être contenues dans des enceintes thermostatées.

Selon une disposition avantageuse, les nombres entiers qui définissent les périodes des différentes boucles sont choisis de manière à optimiser la modulation temporelle de la fonction périodique créée en sortie du dispositif.

Les valeurs relatives des coefficients de couplage des différents coupleurs sont alors choisies en sorte de maximiser le nombre des photons efficaces dans le processus de l'histogramme statistique.

L'appareillage permettant la mesure de la forme temporelle d'une impulsion lumineuse unique comprenant un ensemble tel que ci-dessus est d'une part associé à un détecteur de photons uniques, et, d'autre part connecté à des moyens de traitement de données, ces moyens permettant de reconstruire l'histogramme des temps d'occurrence, dans chaque période $\Delta T$ de ces photons uniques, cet histogramme représentant la forme temporelle de l'impulsion lumineuse unique d'entrée.

Dans cet appareillage, les deux entrées sont utilisées avec leurs sorties respectives comme deux ensembles entièrement indépendants.

Dans cet appareillage, les histogrammes obtenus aux sorties permettent de réaliser une corrélation temporelle entre les impulsions de lumière injectées dans les entrées respectivement.

Grâce aux dispositions qui viennent d'être énoncées, une partie seulement de l'impulsion lumineuse initiale est introduite dans la première boucle et mise en rotation dans celle-ci avec une période constante $T_1 = p.\Delta T$.

A son passage dans les premiers moyens de couplage directionnel à faible coefficient de couplage (dénommés premier coupleur directionnel dans ce qui suit), le paquet de photons en mouvement perd une première fraction de ses photons qui est déviée dans la seconde boucle dans laquelle elle tourne avec une période constante $T_2 = q.\Delta T$.

A son second passage dans le premier coupleur directionnel, le paquet de photons circulant dans la première boucle abandonne une seconde fraction de photons qui est déviée dans la seconde boucle. En raison du fait que les nombres p et q sont des entiers premiers entre eux, les périodes $T_1$ et $T_2$ ne sont pas

multiples l'une de l'autre ; la seconde fraction de photons ne coïncide donc pas avec la première fraction de photons précédemment déviée et ne vient pas grossir celle-ci, mais précède (ou suit) celle-ci d'un intervalle de temps $\varepsilon' = r.\Delta T$ où r est en entier positif et $\Delta T$ est la durée du cycle de mesure précité.

Les première et seconde fractions de photons continuent ensuite à circuler dans la seconde boucle avant que, dans la première boucle, le paquet de photons revienne dans le premier coupleur directionnel et qu'une troisième fraction de photons pénètre dans la seconde boucle avec une avance (ou un retard) de $\varepsilon'$ sur la seconde fraction de photons.

Et ainsi de suite.

Autrement dit, l'appareil conforme à l'invention se comporte comme un distributeur qui, à partir d'une impulsion initiale (ou paquet de photons) unique, présente à l'entrée, et contenant un nombre élevé de photons (par exemple $10^6$ photons), fournit en sortie une multitude d'impulsions constituées au plus d'un photon en moyenne, toutes équidistantes modulo $\Delta T$, sur lesquelles un détecteur peut effectuer les mesures appropriées.

Dans ces conditions, l'amortissement de la valeur moyenne de l'intensité du rayonnement photonique en sortie reste relativement faible et autorise un nombre très élevé (par exemple de l'ordre de 1000 ou plus) de mesures, ce qui permet une mise en oeuvre effective du procédé de l'histogramme statistique pour déterminer la forme de l'impulsion lumineuse initiale.

Un dispositif conforme à l'invention sert donc de sélecteur et, comme cela apparaîtra plus loin, le détecteur placé à la sortie de l'appareil voit défiler des impulsions qui ont toutes (y compris la première) des amplitudes du même ordre de grandeur, le détecteur n'étant alors pas saturé par une première impulsion ayant une amplitude supérieure de trois à quatre ordres de grandeur aux amplitudes des impulsions suivantes comme c'était le cas dans certains dispositifs antérieurs.

Enfin, l'appareil conforme à l'invention ne présente pas de difficultés particulières de réalisation, puisque les trajets en boucle peuvent être réalisés à l'aide de fibres optiques monomode qui sont maintenant bien connues dans la technique, que les raccordements bout-à-bout des fibres monomode sont désormais réalisables par la pose de connecteurs présentant des pertes infimes (inférieures à 1 %), que la longueur de chaque boucle peut être ajustée avec une très grande précision par tronçonnage et polissage itératif d'une extrémité, lors de la pose du connecteur fermant la boucle, et que tous les coupleurs optiques sont à faible coefficient de couplage, et présentent en conséquence peu de pertes.

Dans un exemple de réalisation préférentiel, chaque boucle est constituée de deux tronçons de fibre optique monomode associés respectivement de façon fixe aux seconds moyens de couplage et des connecteurs optiques à faibles pertes sont prévus pour raccorder bout-à-bout ces deux tronçons de fibre optique ; ce type de réalisation est rendu possible grâce à l'existence de connecteurs optiques récents qui possèdent un très bon rendement. Un avantage fondamental de cet exemple de réalisation préféré réside dans le fait que les coupleurs optiques sont réalisés individuellement sur des tronçons de fibre respectifs et que la malfaçon d'un coupleur ne conduit à rejeter que ce seul tronçon et non pas la totalité d'une fibre de grande longueur qui peut déjà être en partie usinée comme dans les dispositifs antérieurs.

Dans un mode de réalisation particulier simple, le dispositif est constitué de deux boucles successives; les périodes $T_1$ et $T_2$ de rotation des photons dans ces deux boucles sont telles que

$$T_1 = p.\Delta T \text{ et } T_2 = q.\Delta T,$$

$\Delta T$ étant la durée d'un cycle de mesure et p et q étant deux entiers premiers entre eux et satisfaisant à la relation

$$Q_1^q + Q_2^p \leqq 1$$

afin que la seconde boucle ne produise en sortie qu'un photon en moyenne, $Q_1$ et $Q_2$ étant les raisons des progressions géométriques traduisant les décroissances du nombre des photons respectivement dans ces deux boucles; le dispositif est constitué de deux boucles successives et le coefficient de couplage des premiers moyens de couplage entre les deux boucles est moitié moindre que les coefficients de couplage des seconds moyens de couplage des première et seconde boucles avec les trajets optiques extérieurs correspondants, lesquels coefficients sont égaux à environ

$$\sqrt[3]{1/N}$$

où N est le nombre de photons dans l'impulsion unique d'entrée.

Par ailleurs, la synchronisation des mouvements des paquets de photons dans les boucles doit rester aussi parfaite que possible, par exemple à mieux que 10 ps ($10^{-11}$s) pendant toute la durée de la procédure d'échantillonnage ; cette synchronisation doit elle-même être synchrone avec une base de temps de référence ayant par exemple une stabilité de 2 ps sur l'ensemble d'une procédure d'échantillonnage, soit environ 20 µs, d'où une précision d'environ $10^{-7}$ qui peut être obtenue avec une horloge à quartz. Les fréquences de rotation des paquets de photons dans les boucles doivent donc être ajustées vis-à-vis de la fréquence d'horloge avec une précision de l'ordre de $10^{-7}$, ce qui peut être obtenu en particulier par une stabilisation dimensionnelle des boucles : à cette fin, on peut enfermer les fibres optiques constituant ces boucles dans des enceintes thermostatées avec une précision d'environ 0,1°C.

Selon un autre aspect, l'invention propose également un appareillage permettant de détecter la forme d'une impulsion lumineuse circulant dans une fibre optique, comportant un dispositif générateur d'impulsions lumineuses équidistantes à photon unique et des moyens de détection du temps d'occurrence de ces photons répétitifs, qui se caractérise en ce que le dispositif générateur d'impulsions lumineuses équidistantes est constitué comme indiqué précédemment.

Le dispositif de l'invention satisfait aux buts précités et permet d'obtenir, à partir d'une impulsion lumineuse initiale unique, des impulsions lumineuses constituées chacune d'au plus un photon en moyenne dont les temps d'occurrence dans chaque période $\Delta T$ sont caractéristiques de la forme de l'impulsion initiale qui peut être restituée par l'histogramme de ces temps, éventuellement après une correction tenant compte des photons multiples ; lorsque la forme est proche d'une courbe de Gauss, l'écart-type de l'histogramme non corrigé représentant à moins de 0,2 % l'écart-type de l'impulsion initiale, la correction ne s'avère pas nécessaire.

En outre, le dispositif fonctionne aussi bien avec une lumière incohérente qu'avec une lumière cohérente.

De plus, le dispositif permet éventuellement de traiter en parallèle deux signaux lumineux circulant à contresens l'un de l'autre.

Par ailleurs, ces deux circuits parallèles peuvent servir à réaliser un corrélateur temporel de très haute résolution.

D'une façon générale, l'invention permet la mesure d'impulsions lumineuses, uniques, très brèves et de faible énergie (par exemple de l'ordre de 1 pJ). Il est ainsi possible d'effectuer une mesure d'impulsions très brèves circulant dans une fibre optique, par prélèvement au passage d'une petite fraction de leur énergie (par exemple 1 %) ; l'impulsion auscultée poursuit son déplacement sans être altérée de façon notable. Il est également possible de reconstituer, grâce au dispositif de l'invention, la forme d'un paquet unique d'électrons circulant dans un accélérateur de particules, par reconstitution de la forme de l'impulsion du rayonnement synchrotronique qui correspond à la forme du paquet d'électrons qui l'a engendré.

Brève description des dessins.

L'invention sera mieux comprise à la lecture de la description détaillée qui suit d'un mode de réalisation préféré, donné uniquement à titre d'exemple non limitatif, et dans laquelle on se réfère aux dessins annexés sur lesquels :

- la figure 1 est une représentation très schématique de l'agencement général d'un dispositif générateur d'impulsions lumineuses équidistantes monophotonique agencé conformément à l'invention ;

- la figure 2 est une représentation très schématique d'un agencement particulier du dispositif conforme à l'invention de la figure 1, incorporé à titre d'exemple dans un appareillage de détection de la forme d'une impulsion lumineuse unique circulant dans une fibre optique ;
- la figure 3 est un graphique représentant l'évolution dans le temps de l'intensité des photons à la sortie de l'appareil de la figure 2 ; et
- les figures 4A et 4B sont deux graphiques illustrant le processus de l'échantillonnage statistique.

Description détaillée de l'invention.

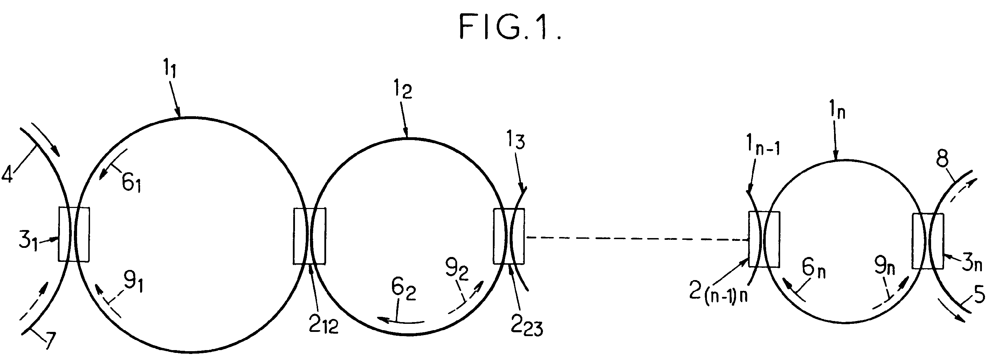

En se référant tout d'abord à la figure 1, le dispositif conforme à l'invention comprend plusieurs trajets optiques $1_1$, $1_2$,..., $1_n$ en forme de boucles fermées sur elles-mêmes, le nombre de ces boucles étant de préférence égal à $\underline{n}$ si le nombre N des photons présents dans l'impulsion lumineuse initiale -unique et de brève durée et à partir de laquelle on souhaite obtenir un train d'impulsions lumineuses équidistantes comportant chacune un photon unique- est supérieur à $10^{2n}$.

Ces boucles $1_1$, $1_2$,...$1_n$ sont réunies deux à deux, les unes à la suite des autres (c'est-à-dire par couples $1_1$-$1_2$, $1_2$-$1_3$,..., $1_{n-1}$-$1_n$, par des premiers moyens de couplage optique directionnel $2_{12}$, $2_{23}$, $2_{34}$,..., $2_{(n-1)n}$ ayant un coefficient de couplage optique relativement faible et égal à environ $(1/N)^{1/(n+1)}$.

La première boucle $1_1$ est en outre raccordée à un circuit d'entrée 4, 7 et la dernière boucle $1_n$ est raccordée à un circuit de sortie 5, 8, ces raccordements s'effectuant par des seconds moyens de couplage optique directionnel, respectivement $3_1$ et $3_n$, ayant eux aussi un coefficient de couplage optique relativement faible.

Tous les trajets optiques sont constitués par des fibres monomode à dispersion nulle en raison de leurs excellentes performances optiques.

En outre chaque boucle $1_1$,..., $1_n$ est indépendante de la fibre qui la précède et de la fibre qui la suit auxquelles elle n'est associée que par les coupleurs optiques précités et est constituée par raccordement bout-à-bout de ses extrémités, à l'aide d'un connecteur optique approprié.

Les périodes de rotation des photons dans les boucles sont choisies suffisamment petites pour que les photons restant dans les boucles à la fin d'une procédure d'échantillonnage ne constituent pas un bruit de fond gênant pour la procédure d'échantillonnage suivante et, pour les deux dernières boucles $1_{n-1}$ et $1_n$, les décroissances du nombre des photons respectivement dans l'avant-dernière boucle $1_{n-1}$ et dans la dernière boucle $1_n$ sont telles que la dernière boucle ne produise en moyenne qu'un photon unique.

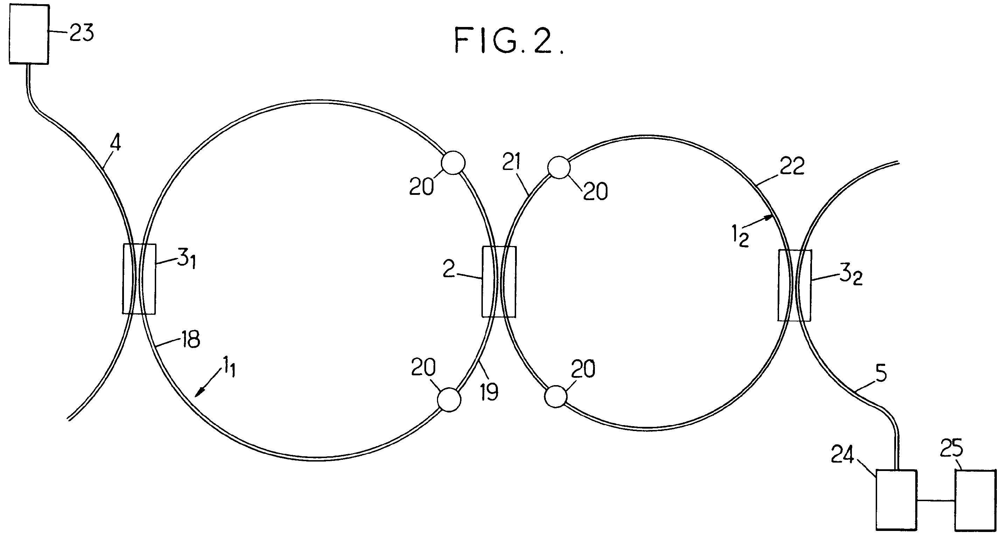

Le mode de fonctionnement du dispositif de l'invention va maintenant être décrit plus en détail en se référant plus spécialement, pour rendre plus claire l'explication, à la figure 2 qui représente un agencement simplifié du dispositif de la figure 1. Le dispositif simplifié de la fig. 2 est composé uniquement de deux boucles (n = 2) respectivement $1_1$ et $1_2$ qui sont couplées l'une à l'autre par un premier coupleur optique directionnel 2 ayant un coefficient de couplage égal à environ

$$\sqrt[3]{1/N}.$$

Sur la figure 2, les références numériques ont été attribuées en correspondance avec celle de la figure 1.

Dans ce mode de réalisation, chaque boucle est constituée non plus par une seule fibre optique, mais par deux tronçons de fibre monomode raccordée bout-à-bout.

Ainsi la boucle $1_1$ est constituée par un tronçon 18 solidarisé de façon fixe au coupleur $3_1$ et un tronçon 19 solidarisé de façon fixe au coupleur 2. Les deux tronçons 18 et 19 sont raccordés bout-à-bout au moyen de deux connecteurs optiques 20 à faibles pertes.

De la même manière, la boucle $1_2$ est constituée par un tronçon de fibre 21 solidarisé de façon fixe au coupleur 2 et un tronçon de fibre 22 solidarisé de façon fixe au coupleur $3_2$, les deux tronçons de fibre 21 et 22 étant raccordés bout-à-bout à l'aide de deux connecteurs optiques 20 à faibles pertes.

Dans le coupleur $3_1$ passe une fibre optique 4 qui est indépendante du tronçon de fibre 18 de la boucle $1_1$ tout en étant optiquement couplée avec ce dernier et qui constitue le trajet optique de l'impulsion initiale.

De même, dans le coupleur $3_2$ passe une fibre optique 5 qui est indépendante du tronçon de fibre 22 de la boucle $1_2$ tout en étant optiquement couplée avec ce dernier et qui constitue le trajet optique de sortie des impulsions monophotoniques de sortie.

Dans ces conditions, les trois coupleurs $3_1$, $3_2$ et 2 possèdent un faible coefficient de couplage ; par exemple les deux coupleurs $3_1$ et $3_2$ sont identiques et ont le même coefficient de couplage qui est double du coefficient de couplage du coupleur 2.

Lorsque les boucles sont réalisées en utilisant des coupleurs démontables, l'un des deux connecteurs 20 de chaque boucle peut être supprimé en prenant soin de réaliser deux demi-coupleurs sur la même fibre optique, afin d'en diminuer les pertes.

La pose du connecteur qui ferme une boucle sur elle-même permet un ajustement mécanique précis à $10^{-6}$ du temps de révolution des photons grâce au tronçonnage récurrent des fibres et au polissage final des connecteurs. Ceci constitue une caractéristique essentielle de l'invention qui se distingue ainsi de l'art antérieur.

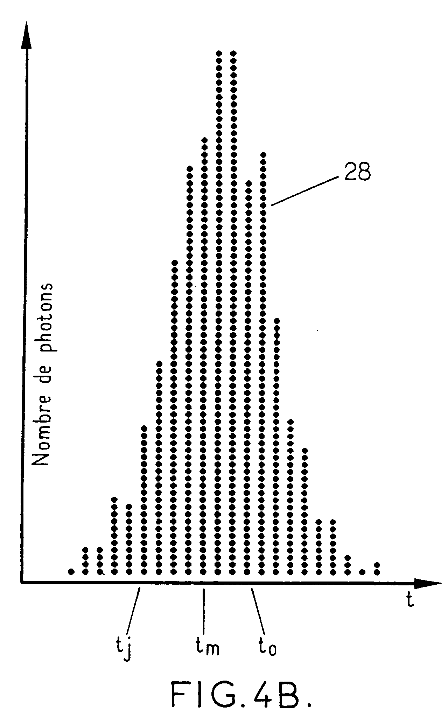

De plus, le dispositif simplifié conforme à l'invention, montré à la figure 2, est représenté inclus dans un appareillage complet permettant de mesurer le temps d'occurrence, dans chaque période $\Delta T$, des photons uniques obtenus à partir d'une impulsion lumineuse initiale (obtention du relevé représenté à la figure 4B), afin ensuite de pouvoir reconstituer la forme temporelle de l'impulsion initiale par mise en oeuvre du procédé de l'histogramme statistique. A cette fin, la sortie 5 du dispositif sur laquelle apparaissent des impulsions lumineuses constituées au plus d'un photon en moyenne est raccordée à un dispositif de détection 24, lui-même connecté à des moyens 25 de traitement des données permettant, par mise en oeuvre du procédé de l'histogramme statistique, de reconstituer la forme temporelle de l'impulsion initiale comme cela sera indiqué plus loin.

Pour décrire maintenant plus spécifiquement le fonctionnement de l'appareillage de la figure 2, à l'entrée 4 du premier trajet optique $1_1$ est appliquée une impulsion initiale de lumière ou paquet initial de photons émis par une source lumineuse 23 (par exemple impulsion de lumière cohérente émise par une source laser, ou bien rayonnement synchrotron accompagnant le déplacement de particules dans un champ magnétique). Etant donné les caractéristiques de couplage du coupleur directionnel $3_1$, seule une faible portion (par exemple 1 %) de cette impulsion lumineuse est dirigée dans la boucle $1_1$. En raison des faibles différences de longueur d'onde des photons admis dans l'impulsion initiale, adaptées au minimum de dispersion de la fibre monomode, les vitesses sont extrêmement voisines et le paquet peut se propager sur de longues distances (plusieurs kilomètres) sans se déformer. L'amortissement de l'intensité est de l'ordre de 4 % par tour (dû notamment aux pertes dans les coupleurs $3_1$ et 2 et dans les connecteurs 20).

A chaque passage du paquet de photons dans le coupleur 2, une fraction des photons (par exemple 1 %, voire 0,5 %) est déviée en direction de la seconde boucle $1_2$, dans laquelle elle tourne avec une période $T_2$ qui est à la période $T_1$ dans le rapport des entiers q/p.

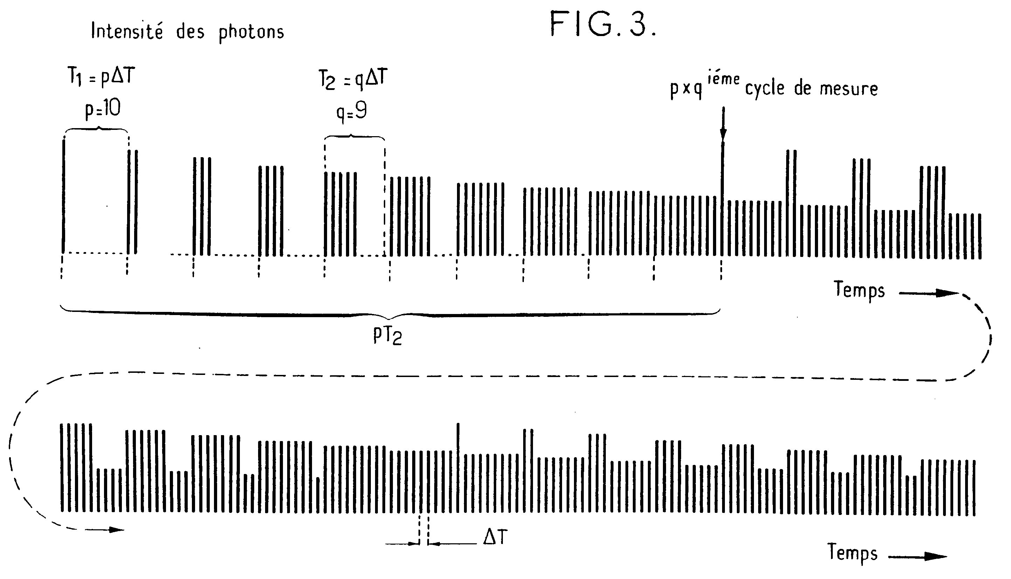

Dans un exemple typique où le rapport q/p est proche de l'unité, les périodes $T_1$ et $T_2$ sont voisines, comme l'illustre la figure 2 (de façon exacte, l'introduction entre elles d'un écart $\Delta T$ conduit aux valeurs typiques $T_1$ = 180 ns, $T_2$ = 162 ns), le second apport de photons arrive dans la seconde boucle un temps $\Delta T$ après que le premier apport ait effectué une période $T_2$, et ainsi de suite de sorte que la seconde boucle se remplit de paquets rapprochés (voir encore la figure 3).

L'intensité des paquets de photons dans une boucle diminue à chaque période de révolution du fait des couplages choisis et des pertes inévitables dues aux coupleurs, aux connecteurs et aux fibres elles-mêmes, comme une progression géométrique de raison Q égale à

$$Q = 1 - \frac{\text{pertes totales dans une période}}{\text{intensité initiale}}$$

Comme les raisons $Q_1$ et $Q_2$ des deux boucles considérées dans l'exemple typique sont égales, les paquets décroissent de la même manière avant et après avoir été transférés de la première à la seconde boucle, ce qui explique qu'un groupe de paquets serrés se présente à la sortie 5 avec une intensité constante.

Afin d'éviter l'empilement précoce des nouveaux apports de la première boucle sur les paquets circulant déjà dans la seconde, les périodes respectives sont choisies telles que :

$$T_1 = p.\Delta T \text{ et } T_2 = q.\Delta T$$

p et q étant deux entiers premiers entre eux et $\Delta T$ étant la durée d'un cycle de mesure, les valeurs $T_1$ et $T_2$ étant suffisamment petites pour que les photons restants dans les boucles à la fin d'une procédure d'échantillonnage ne constituent pas un bruit de fond gênant pour la procédure suivante.

Au bout d'un temps $T_1$ (en retard de $\Delta T$ sur le temps $T_2$ en supposant p = q + 1 comme représenté à la figure 3), le paquet de photons circulant dans la première boucle $1_1$ a effectué un tour complet et abandonne, dans le coupleur directionnel 2, une seconde fraction de photons qui pénètre dans la seconde boucle $1_2$ avec une intensité initiale $I_2$. Cette seconde fraction de photons suit la première fraction de photons à un intervalle de temps $\Delta T$, de sorte que leurs intensités respectives ne se cumulent pas et son intensité décroît selon une progression géométrique de raison $Q_2$ (voir figure 3).

Il en sera de même à chaque passage, dans le coupleur 2, du paquet de photons circulant dans la première boucle $1_1$.

On remarquera que, au cours de ses rotations successives, l'intensité de ce paquet de photons subit elle aussi un affaiblissement suivant une progression géométrique de raison $Q_1$. Dans l'exemple typique représenté à la figure 3, les raisons $Q_1$ et $Q_2$ étant supposées égales, les différents paquets d'un groupe serré (de 2, 3, ... jusqu'à 10 paquets) ont la même intensité comme ayant parcouru le même nombre de périodes soit dans la boucle $1_1$ soit dans la boucle $1_2$.

Lorsqu'enfin l'empilement a lieu, au bout d'un temps égal à p.q.$\Delta T$, il faut s'assurer que l'intensité résultante ne dépasse pas l'unité, soit :

$$Q_1{}^q + Q_2{}^p \leqq 1$$

afin que la deuxième boucle ne produise en moyenne qu'un photon à sa sortie, $Q_1$ et $Q_2$ étant les raisons des progressions géométriques traduisant les décroissances du nombre des photons respectivement dans chacune des boucles.

On conçoit donc que les impulsions lumineuses parvenant à la sortie 5 du dispositif possèdent des intensités qui sont toutes du même ordre de grandeur, ce qui permet de définir au mieux le domaine de fonctionnement du détecteur connecté à la sortie 5 et d'en améliorer l'efficacité. Grâce à l'empilement des paquets de photons qui survient pour la première fois au temps p.q.$\Delta$T une compensation partielle de l'affaiblissement progressif des impulsions est obtenue (voir figure 3) et il est possible de prévoir la fourniture, en sortie 5, d'un grand nombre d'impulsions monophotoniques (par exemple supérieur à 1000) autorisant, en ayant recours à des moyens de traitement d'information et d'affichage, la mise en oeuvre du procédé de l'histogramme statistique pour reconstituer statistiquement la forme de l'impulsion lumineuse (ou du paquet de photons) initiale passant dans le trajet 4.

En outre, on conçoit également que ce grand nombre d'impulsions monophotoniques de sortie puisse être obtenu éventuellement à partir d'une unique impulsion d'entrée (dans laquelle le nombre de photons peut être par exemple de $10^6$).

En d'autres termes, dans l'appareil de l'invention, les premières boucles $1_1$ et $1_2$ se comportent comme des réservoirs de photons qu'elles retiennent aussi longtemps que souhaitable avec une diminution d'intensité aussi faible que possible et qu'elles libèrent périodiquement des fractions de paquets de photons qui, à leur tour, libèrent des impulsions monophotoniques sur lesquelles peuvent être effectuées des mesures de temps d'occurrence des photons dans la période $\Delta$T.

Les photons circulent dans les deux boucles dans les sens indiqués par les flèches en trait plein $6_1$, $6_2$ (voir figure 1).

Etant donné que le dispositif est réversible, il est possible de faire circuler dans le dispositif deux ensembles de paquets de photons se déplaçant en sens inverse l'un de l'autre. A cet effet (voir figure 1), celui $3_1$ des seconds moyens de couplage qui est associé à la première boucle $1_1$ peut aussi réunir cette boucle à un autre trajet optique extérieur 7 pour l'entrée d'une autre impulsion initiale dans la boucle $1_1$ ; de même celui $3_n$ des seconds moyens de couplage qui est associé à la dernière boucle $1_2$ peut réunir cette boucle à un autre trajet optique extérieur 8 pour la sortie d'un autre train d'impulsions équidistantes monophotoniques. Les photons circulent dans les boucles dans le sens indiqué par les flèches en tirets $9_1$, $9_2$, en sens inverse des précédents.

En outre, on notera que le dispositif de l'invention fonctionne aussi bien avec une impulsion de lumière non cohérente qu'avec une impulsion de lumière cohérente.

On comprendra aisément que la fiabilité des mesures repose sur une parfaite synchronisation des mouvements des photons dans les différentes boucles, cette synchronisation devant garantir une dérive inférieure, par exemple, à 10 ps jusqu'à la fin de la procédure d'échantillonnage. Ces mouvements doivent eux-mêmes être en synchronisation avec une base de temps de référence ayant par exemple une stabilité de 2 ps sur l'ensemble d'une procédure d'échantillonnage (soit, dans l'exemple typique envisagé, environ deux centaines de tours du paquet de photons dans la première boucle $1_1$ pour obtenir environ 1000 points de mesure) d'environ 20 µs ; d'où une précision nécessaire de $10^{-7}$ qui peut aisément être obtenue à l'aide d'une horloge à quartz.

Les fréquences de rotation des photons dans les boucles doivent donc être ajustées vis-à-vis de la fréquence d'horloge avec une précision d'au moins $10^{-7}$, ce qui peut être obtenu :

a) par un tronçonnage récurrent des fibres optiques au moment de la pose du connecteur qui ferme la boucle (précision de $10^{-4}$) ;

b) par le polissage progressif des embouts du connecteur (précision de $10^{-6}$) ;

c) enfin, par une stabilisation dimensionnelle des fibres optiques constituant les boucles, ce qui est rendu possible en enfermant ces fibres dans des enceintes thermostatées dont les températures respectives seront contrôlées à 0,1°C près.

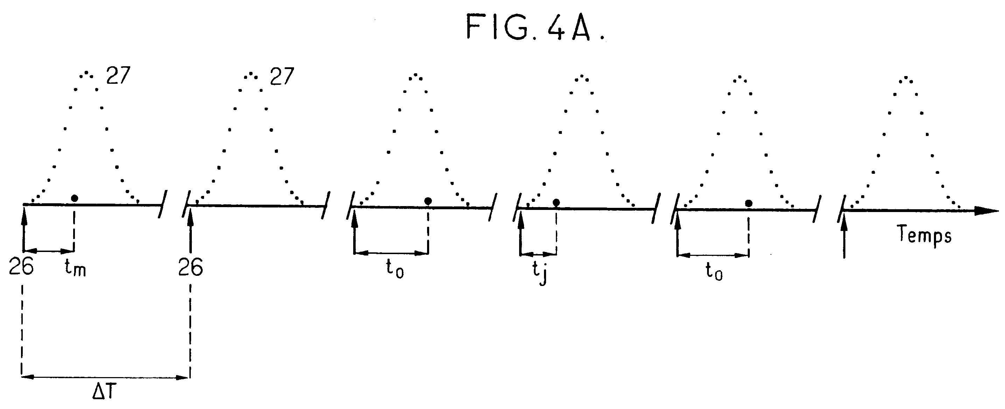

Pour mieux fixer les idées, on se reportera aux figures 4A et 4B qui illustrent le processus d'établissement de l'histogramme statistique.

Sur le graphique de la figure 4A, on a représenté, en fonction du temps T, les instants d'occurrence $t_m$, $t_o$, $t_j$... des photons uniques détectés par le détecteur 24, mesurés par rapport à des impulsions de référence 26 (montrés en-dessous de l'axe) parfaitement périodiques et synchrones générées par une horloge synchrone parfaitement stabilisée (non montrée). Sur le même graphique, on a représenté en pointillé l'impulsion lumineuse unique initiale 27 positionnée par rapport aux impulsions d'horloge, ce qui permet d'illustrer schématiquement la position (aléatoire) des photons uniques détectés dans cette impulsion.

La figure 4B est un graphique sur lequel les temps d'occurrence $t_j$, $t_m$,.... sont portés en abscisses et le nombre des photons uniques détectés à des temps d'occurrence $t_j$, $t_m$,.... est porté en ordonnées. L'enveloppe de l'histogramme 28 ainsi établi constitue une représentation approximative de la forme de l'impulsion lumineuse unique initiale, l'approximation étant bien entendu d'autant meilleure que le nombre des photons uniques détectés est élevé.

Comme il va de soi et comme il résulte d'ailleurs déjà de ce qui précède, l'invention ne se limite nullement à ceux de ses modes d'application et de réalisation qui ont été plus particulièrement envisagés ; elle en embrasse, au contraire, toutes les variantes.

## Revendications

1. Dispositif pour engendrer, à partir d'une impulsion lumineuse unique de brève durée et constituée d'un nombre prédéterminé N de photons, un train d'impulsions lumineuses équidistantes comportant chacune au plus un photon en moyenne, ledit dispositif possédant les propriétés suivantes :

- il comprend plusieurs trajets optiques ($1_1$, $1_2$,...$1_n$) constitués chacun par au moins une fibre optique monomode à dispersion nulle en forme de boucle fermée sur elle-même par raccordement bout-à-bout de ses extrémités au moyen d'au moins un connecteur (20) ;
- le nombre des boucles est de n si le nombre N des photons dans l'impulsion initiale est supérieur à $10^{2n}$ ;
- ces boucles sont réunies deux à deux, les unes à la suite des autres, par des premiers moyens de couplage optique directionnel ($2_{12}$, $2_{23}$,...$2_{(n-1)n}$) ayant un coefficient de couplage optique relativement faible et égal à environ $(1/N)^{1/(n+1)}$ ;
- des seconds moyens de couplage optique directionnel ($3_1$, $3_n$) ayant eux aussi un coefficient de couplage optique relativement faible réunissent les première ($1_1$) et dernière ($1_n$) boucles avec des trajets optiques extérieurs (resp. 4 ou 7 ; 5 ou 8) respectivement pour l'entrée de seulement une faible partie de l'impulsion lumineuse initiale et pour la sortie du train d'impulsions équidistantes constituées au plus d'un photon unique en moyenne ;
- les longeurs des boucles sont choisies de façon que les périodes de rotation des photons dans les boucles sont égales à des nombres entiers premiers entre eux multiples de périodes élémentaires $\Delta T$ , et
- et en ce que les périodes de rotation des photons dans les boucles sont suffisamment petites pour que les photons restant dans les boucles à la fin d'une procédure d'échantillonnage ne constituent pas un bruit de fond gênant pour la procédure d'échantillonnage suivante.

2. Dispositif selon la revendication 1, caractérisé en ce que le coefficient de couplage des premiers et seconds moyens de couplage est inférieur à 10 %, notamment inférieur à 1 %.

3. Dispositif selon la revendication 1 ou 2, caractérisé en ce que chaque boucle ($1_1$..., $1_n$) est constituée de deux tronçons de fibre optique monomode associés respectivement de façon fixe aux seconds moyens de couplage et en ce que deux connecteurs optiques à faibles pertes (20) sont prévus pour raccorder bout-à-bout ces deux tronçons de fibre optique.

4. Dispositif selon la revendication 1 ou 2, caractérisé en ce que chaque boucle ($1_1$..., $1_n$) est constituée de trois tronçons de fibre optique monomode associés respectivement de façon fixe aux seconds moyens de couplage et en ce que trois connecteurs optiques à faibles pertes (20) sont prévus pour raccorder bout-à-bout ces trois tronçons de fibre optique.

5. Dispositif selon l'une quelconque des revendications 1 à 4, caractérisé en ce qu'il est constitué de deux boucles successives ($1_1$, $1_2$) ; en ce que les périodes $T_1$ et $T_2$ de rotation des photons dans ces deux boucles sont telles que

$$T_1 = p.\Delta T \text{ et } T_2 = q.\Delta T,$$

$\Delta T$ étant la durée d'un cycle de mesure et p et q étant deux entiers premiers entre eux et satisfaisant à la relation

$$Q_1^q + Q_2^p \leqq 1$$

afin que la seconde boucle ne produise en sortie qu'un photon unique, $Q_1$ et $Q_2$ étant les raisons des progressions géométriques traduisant les décroissances du nombre des photons respectivement dans ces deux boucles; et en ce que le coefficient de couplage des premiers moyens de couplage entre les deux boucles est moitié moindre que les coefficients de couplage des seconds moyens de couplage des première et seconde boucles avec les trajets optiques extérieurs correspondants, lesquels coefficients sont égaux à environ

$$\sqrt[3]{1/N}$$

où N est le nombre de photons dans l'impulsion unique d'entrée.

6. Dispositif selon l'une quelconque des revendications 1 à 5, caractérisé en ce que les boucles ($1_1$..., $1_n$) sont contenues dans des enceintes thermostatées.

7. Dispositif selon l'une quelconque des revendications 1 à 6, caractérisé en ce que les nombres entiers qui définissent les périodes des différentes boucles sont choisis de manière à optimiser la modulation temporelle de la fonction périodique créée en sortie du dispositif.

8. Dispositif selon l'une quelconque des revendications 1 à 7, caractérisé en ce que les valeurs relatives des coefficients de couplage des différents coupleurs sont choisies en sorte de maximiser le nombre des photons efficaces dans le processus de l'histogramme statistique.

9. Appareillage permettant la mesure de la forme temporelle d'une impulsion lumineuse unique comprenant un ensemble selon l'une quelconque des revendications 1 à 8, ledit ensemble étant, d'une part associé à un détecteur (24) de photons uniques, et, d'autre part connecté à des moyens (25) de traitement de données, ces moyens (25) permettant de reconstruire l'histogramme des temps d'occurrence, dans chaque période $\Delta T$, de ces photons uniques, cet histogramme représentant la forme temporelle de l'impulsion lumineuse unique d'entrée.

10. Appareillage selon la revendication 9, caractérisé en ce que les deux entrées (4,7) sont utilisées avec leurs sorties respectives (5,8) comme deux ensembles entièrement indépendants.

11. Appareillage selon la revendication 10, caractérisé en ce que les histogrammes obtenus aux sorties (5,8) permettent de réaliser une corrélation temporelle entre les impulsions de lumière injectées dans les entrées (4,7) respectivement.

**Patentansprüche**

1. Vorrichtung zur Erzeugung einer Folge von äquidistanten Lichtpulsen, die im Mittel jeweils höchstens ein Photon umfassen, die von einem Einzelpuls kurzer Dauer abgeleitet werden, der aus einer vorbestimmten Anzahl N von Photonen gebildet ist, wobei diese Vorrichtung die folgenden Eigenschaften aufweist:
   - sie umfaßt mehrere Lichtwege ($1_1$, $1_2$, ... $1_n$), wobei jeder aus wenigstens einer optischen Monomod-Faser mit Dispersion Null in Form eines in sich geschlossenen Ringes durch Aneinanderfügen ihrer Enden mittels wenigstens eines Verbindungselementes (20) ausgebildet ist,
   - die Anzahl der Ringe ist n, wenn die Anzahl N der Photonen in dem Anfangspuls größer als $10^{2n}$ ist,
   - diese Ringe sind paarweise, die einen hinter den anderen, durch erste Einrichtungen zum direkten optischen Koppeln ($2_{12}$, $2_{23}$, ...$2_{(n-1)n}$) verbunden, wobei die Einrichtungen zum direkten optischen Koppeln einen relativ schwachen optischen Kopplungskoeffizient haben, der etwa gleich $(1/N)^{1/(n+1)}$ ist,
   - zweite Einrichtungen zum direkten optischen Koppeln ($3_1$, $3_n$), die auch einen relativ schwachen optischen Kopplungskoeffizient haben, verbinden jeweils den ersten ($1_1$) und den letzten ($1_n$) Ring mit den äußeren Lichtwegen (4 oder 7; 5 oder 8), um einen Eingang für nur einen schwachen Teil des Anfangslichtpulses und um einen Ausgang für die äquidistante Folge von Pulsen vorzusehen, die im Mittel höchstens aus einem einzigen Photon gebildet sind,
   - die Längen der Ringe sind in der Art und Weise gewählt, daß die Umlaufzeit der Photonen in den Ringen gleich ganzen Zahlen ohne gemeinsamen Teiler multipliziert mit der Elementarperiode $\Delta T$ sind, und
   - daß die Umlaufzeiten der Photonen in den Ringen ausreichend klein sind, so daß die Photonen in den Ringen bis zum Ende der Probenentnahme bleiben und nicht eine Hintergrundstörung für die nachfolgende Probenentnahme erzeugen.

2. Vorrichtung nach Anspruch 1,
   dadurch gekennzeichnet,
   daß der Kopplungskoeffizient der ersten und zweiten Einrichtungen zum Koppeln kleiner als 10 %, insbesondere kleiner als 1 %, ist.

3. Vorrichtung nach Anspruch 1 oder 2,
   dadurch gekennzeichnet,
   daß jeder Ring ($1_1$,...,$1_n$) aus zwei optischen Monomod-Faserabschnitten ausgebildet ist, die jeweils den zweiten Kopplungseinrichtungen fest zugeordnet sind, und daß die zwei optischen Verbindungselemente (20) mit schwachem Verlust vorgesehen sind, um diese zwei optischen Faserabschnitte Ende an Ende aneinanderzufügen.

4. Vorrichtung nach Anspruch 1 oder 2,
   dadurch gekennzeichnet,
   daß jeder Ring ($1_1$,...,$1_n$) aus drei optischen Monomod-Faserabschnitten ausgebildet ist, die jeweils den zweiten Kopplungseinrichtungen fest zugeordnet sind, und daß drei optische Verbindungselemente (20) mit schwachem Verlust vorgesehen sind, um diese drei optischen Faserabschnitte Ende an Ende aneinanderzufügen.

5. Vorrichtung nach einem der Ansprüche 1-4,
   dadurch gekennzeichnet,
   daß sie aus zwei aufeinander folgenden Ringen ($1_1$, $1_2$) ausgebildet ist, und daß die Umlaufzeiten $T_1$ und $T_2$ der Photonen in diesen zwei Ringen gleich
$$T_1 = p \cdot \Delta T \text{ und } T_2 = q \cdot \Delta T$$
sind, wobei $\Delta T$ die Dauer eines gemessenen Zyklus ist und p und q zwei ganze Zahlen ohne gemeinsamen Teiler sind, die die folgende Relation erfüllen
$$Q_1{}^q + Q_2{}^p \leqq 1$$
damit der zweite Ring nur ein einziges Photon am Ausgang erzeugt, wobei $Q_1$ und $Q_2$ die Glieder von geometrischen Reihen sind, die jeweils die Abnahme der Anzahl der Photonen in diesen zwei Ringen wiedergeben, und daß der Kopplungskoeffizient der ersten Kopplungseinrichtung zwischen den Ringen halb so groß ist, wie der Kopplungskoeffizient der zweiten Kopplungseinrichtung des ersten und zweiten Ringes mit den entsprechenden äußeren Lichtwegen, wobei diese Koeffizienten in etwa gleich

$$\sqrt[3]{1/N}$$

sind, wobei N die Anzahl der Photonen in dem einzelnen Puls am Eingang sind.

6. Vorrichtung nach einem der Ansprüche 1-5, dadurch gekennzeichnet,
daß die Ringe ($1_1$,...,$1_n$) in einem temperaturstabilen Bereich gehalten werden.

7. Vorrichtung nach einem der Ansprüche 1-6, dadurch gekennzeichnet,
daß die ganzen Zahlen, die die Perioden der unterschiedlichen Ringe definieren, derart gewählt sind, daß die zeitliche Modulation der periodischen Funktion, die am Ausgang der Vorrichtung erzeugt wird, optimiert ist.

8. Vorrichtung nach einem der Ansprüche 1-7, dadurch gekennzeichnet,
daß die relativen Werte der Kopplungskoeffizienten der unterschiedlichen Koppler derart gewählt sind, daß die Anzahl der wirksamen Photonen in dem statistischen Histogrammverfahren maximiert sind.

9. Apparatur zur Messung des zeitlichen Verlaufs eines Einzellichtpulses, umfassend einen Aufbau nach einem der Ansprüche 1-8, wobei der Aufbau einerseits mit einem Detektor (24) für einzelne Photonen verbunden ist, andererseits mit einer Einrichtung (25) zum Verarbeiten von Daten verbunden ist, wobei diese Einrichtung (25) die Wiederherstellung des Histogramms über die auftretende Zeit in jeder Periode ΔT für diese einzelnen Photonen erlaubt, wobei dieses Histogramm den zeitlichen Verlauf des Einzellichtpulses am Eingang darstellt.

10. Apparatur nach Anspruch 9, dadurch gekennzeichnet,
daß die zwei Eingänge (4, 7) mit ihren jeweiligen Ausgängen (5, 8) wie zwei völlig unabhängige Aufbauten verwendet werden.

11. Apparatur nach Anspruch 10, dadurch gekennzeichnet,
daß die an den Ausgängen (5, 8) erhaltenen Histogramme die Ausführung einer zeitlichen Korrelation zwischen den an den Eingängen (4, 7) jeweils injizierten Lichtpulsen erlauben.

## Claims

1. Device for generating, from a single light pulse of brief duration and constituted of a predetermined number N of photons, a train of equidistant light pulses each comprising at most one photon on average, said device having the following features :
   - it comprises several optical paths ($1_1$, $1_2$, ..., $1_n$) each formed by at least one single mode optical fiber with zero dispersion in the form of a loop closed on itself by end to end connection of its ends by at least one connector (20) ;
   - the number of loops is n if the number N of the photons in the initial pulse is greater than $10^{2n}$ ;
   - these loops are joined together two by two, following each other, by first directional optical coupling means ($2_{12}$, $2_{23}$,...,$2_{(n-1)n}$) having a relatively small optical coupling coefficient equal to about $(1/N)^{1/(n+1)}$ ;
   - second directional optical coupling means ($3_1$, $3_n$) also having a relatively low optical coupling coefficient join the first ($1_1$) and last ($1_n$) loops with external optical paths (respectively 4 or 7 ; 5 or 8) respectively for the input of only a small part of the initial light pulse and for the output of the train of equidistant pulses formed at most of a single photon on average ;
   - the lenghts of loops are selected so that the periods of rotation of the photons in the loops are equal to integral numbers, prime with respect to each other, of elementary periods ΔT ; and
   - the periods of rotation of the photons in the loops are sufficiently small so that the photons remaining in the loops at the end of a sampling procedure do not form a background noise troublesome for the following sampling procedure.

2. Device according to claim 1, characterized in that the coupling coefficient of the first and second coupling means is less than 10 %, in particular less than 1 %.

3. Device according to claim 1 or 2, characterised in that each loop ($1_1$,...,$1_n$) is formed of two single mode optical fiber sections associated respectively in a fixed way with the second coupling means and in that two low loss optical connectors (20) are provided for connecting these two optical fiber sections end to end.

4. Device according to claim 1 or 2, characterized in that each loop $(1_1,...,1_n)$ is formed of three single mode optical fiber sections associated respectively in a fixed way with the second coupling means and in that three low loss optical connectors (20) are provided for connecting these three optical fiber sections end to end.

5. Device according to anyone of claims 1 to 4, characterized in that it is formed of two successive loops $(1_1, 1_2)$ ; in that the periods $T_1$ and $T_2$ of rotation of the photons in these two loops are such that :

$$T_1 = p.\Delta T \text{ and } T_2 = q.\Delta T$$

$\Delta T$ being the duration of a measurement cycle and p and q being two integral numbers, prime with respect to each other, and satisfying the relationship :

$$Q_1^q + Q_2^p \leqq 1$$

so that the second loop outputs only a single photon, $Q_1$ and $Q_2$ being the common ratios of the geometric progressions representing the decreases of the number of photons respectively in these two loops ; and in that the coupling coefficient of the first coupling means between the two loops is less by half than the coupling coefficients of the second coupling means of the first and second loops with corresponding external optical paths, which coefficients are equal to about :

$$\sqrt[3]{1/N}$$

where N is the number of photons in the single input pulse.

6. Device according to anyone of claims 1 to 5, characterized in that the loops $(1_1,..., 1_n)$ are contained in thermostat controlled enclosures.

7. Device according to anyone of claims 1 to 6, characterized in that the integral numbers which define the periods of the different loops are chosen so as to optimize the modulation in time of the periodic function created at the output of the device.

8. Device according to anyone of claims 1 to 7, characterized in that the relative values of the coupling coefficients of the different couplers are chosen so as to maximize the number of efficient photons in the statistical histogram method.

9. Apparatus for measuring the form in time of a single light pulse comprising an assembly according to anyone of claims 1 to 8, said assembly being, on the one hand, associated with a single photon detector (24) and, on the other hand, connected to data processing means (25), these means (25) making it possible to reconstruct the histogram of the occurrence times, in each period $\Delta T$, of these single photons, this histogram representing the form in time of the single input light pulse.

10. Apparatus according to claim 9, characterized in that the two inputs (4, 7) are used with their respective outputs (5, 8) as two entirely independent eassemblies.

11. Apparatus according to claim 10, characterized in that histograms obtained at the outputs (5, 8) make possible a correlation in time between the light pulses injected in the inputs (4, 7) respectively.

# FIG.1.

EP 0 344 027 B1

FIG.2.

EP 0 344 027 B1

FIG. 3.

Intensité des photons

$T_1 = p\Delta T$
$p = 10$

$T_2 = q\Delta T$
$q = 9$

$p \times q^{ième}$ cycle de mesure

$PT_2$

Temps

Temps

$\Delta T$

EP 0 344 027 B1

# FIG. 4A.

Temps

ΔT

$t_m$  $t_0$  $t_j$  $t_0$

26  26

27  27

EP 0 344 027 B1

FIG.4B.